Europäisches Patentamt

**European Patent Office**

Office européen des brevets

(11) Numéro de publication: **0 097 582**

**A2**

(12) **DEMANDE DE BREVET EUROPEEN**

(21) Numéro de dépôt: **83401235.3**

(22) Date de dépôt: **16.06.83**

(51) Int. Cl.³: **B 60 K 5/04**

(30) Priorité: **16.06.82 FR 8210495**

(43) Date de publication de la demande:
**04.01.84 Bulletin 84/1**

(84) Etats contractants désignés:
**BE DE GB IT SE**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Darlot, Daniel**
**1, avenue du Général Leclerc**
**F-69140 Rillieux(FR)**

(72) Inventeur: **Mathieu, Henri**
**44, avenue M. Cochin**
**F-92320 Chatillon(FR)**

(72) Inventeur: **Gaska, Michel**
**Chemin des Bruyères Ste. Consorce**
**F-69260 Charbonnieres les Bains(FR)**

(74) Mandataire: **Chassagnon, Jean-Alain**
**REGIE NATIONALE DES USINES RENAULT**
**F-92109 Boulogne-Billancourt(FR)**

(54) **Carter pour transmission d'un ensemble motopropulseur de véhicule industriel et ensemble ainsi équipé.**

(57) Carter pour transmission de véhicule industriel. Il consiste en un premier élément 16 formant carter d'embrayage 4, moulé ou formé en une seule pièce avec un second élément 9 formant renvoi d'angle de transmission, comportant un axe d'entrée 8 et un axe de sortie 10, tous deux munis d'organes d'accouplement, respectivement à une première transmission 7 entraînée par la boîte de vitesses 5 du véhicule, et à une deuxième transmission 11 entraînant au moins un pont moteur 12 du véhicule.

Application à la transmission des véhicules de transport en commun où le groupe motopropulseur est placé en porte à faux arrière.

FIG.4

EP 0 097 582 A2

CARTER POUR TRANSMISSION D'UN ENSEMBLE MOTOPROPULSEUR
DE VEHICULE INDUSTRIEL ET ENSEMBLE AINSI EQUIPE

La présente invention vise un carter monobloc pour une transmission de véhicule industriel et plus particulièrement pour un véhicule urbain de transport en commun, ou autobus, dans le cas où le groupe motopropulseur est disposé transversalement à l'arrière.

On sait que les véhicules de transport en commun ont un plancher surbaissé pour en faciliter l'accès, ce qui pose des problèmes pour loger le groupe motopropulseur et la transmission. La solution la plus souvent retenue consiste à placer le groupe motopropulseur à l'arrière du véhicule, transversalement, ce qui nécessite un renvoi d'angle sur la transmission. Afin de respecter la garde au sol imposée par la règlementation et le cahier des charges du véhicule (angle de fuite), on place généralement le renvoi d'angle sous la boîte de vitesses, ce qui conduit à un décalage transversal important entre ce renvoi d'angle et le pont, obligeant ainsi les joints de cardan de la transmission à fonctionner avec des angles importants, ce qui réduit leur longévité.

Afin de faire fonctionner cette transmission dans de bonnes conditions, il est donc souhaitable de placer le renvoi d'angle sous l'embrayage. Dans les solutions classiques de renvoi d'angle à carter séparé, cette solution est pénalisée par sa hauteur.

L'invention a pour objet de remédier à ces divers inconvénients et de permettre la réalisation d'une transmission fonctionnant dans de bonnes conditions en ce qui concerne les joints de cardan de la transmission, et aussi de permettre une réduction importante de l'encombrement en hauteur de l'ensemble du groupe motopropulseur et de la transmission qui y est associée.

A cet effet, la présente invention propose un carter pour transmission de véhicule industriel, caractérisé en ce qu'il consiste en un premier élément formant carter d'embrayage, moulé ou formé en une seule pièce, avec un second élément formant renvoi d'angle de transmission, ledit renvoi comportant, de manière usuelle, un axe d'entrée et un axe de sortie, tous deux munis d'organes d'accouplement, respectivement à une première transmission entraînée par la boîte de vitesses du véhicule, et à une deuxième transmission entraînant au moins un pont moteur dudit véhicule.

Selon une caractéristique particulièrement avantageuse de l'invention, l'axe de l'arbre de sortie du renvoi d'angle est incliné par rapport à l'horizontale d'un angle correspondant sensiblement à l'angle de fuite du véhicule équipé du carter, c'est-à-dire à l'angle, mesuré dans le sens de la marche, du soubassement de la carrosserie d'une partie d'extrémité du véhicule.

Le carter selon l'invention est plus particulièrement destiné à être associé à un ensemble motopropulseur groupé à l'arrière d'un véhicule industriel, comprenant un moteur, une boîte de vitesse accouplée à ce moteur par l'intermédiaire d'un embrayage abrité dans ledit carter, une descente de mouvement à la sortie de cette boîte de vitesses, qui entraîne une première transmission reliée à l'axe d'entrée du renvoi d'angle contenu dans ledit carter et reliée à l'axe de sortie de ce renvoi, une deuxième transmission qui attaque le pont arrière dudit véhicule. Selon une disposition prévue par l'invention, le carter est disposé de manière que l'axe de sortie du renvoi d'angle soit sensiblement aligné avec l'entrée du pont arrière, en projection sur un plan horizontal. Ainsi, cet axe de sortie qui, par ailleurs, fait avec l'horizontale un angle sensiblement égal à l'angle de fuite du véhicule, est pratiquement aligné avec l'axe d'entrée du pont, tant en projection horizontale qu'en projection verticale, ce qui réduit très fortement le travail des joints de cardan de la deuxième transmission qui relie ledit renvoi d'angle au pont arrière.

Selon une autre disposition avantageuse visant encore à réduire l'encombrement du groupe motopropulseur, l'axe d'entrée du renvoi d'angle est disposé dans un plan vertical différent de celui contenant l'axe du moteur.

Les caractéristiques et avantages de l'invention ressortiront d'ailleurs mieux de la description suivante donnée uniquement à titre d'exemple, en référence aux dessins annexés dans lesquels:

- la figure 1 est une vue schématique de dessous d'un véhicule comportant un ensemble motopropulseur arrière équipé d'un carter selon l'invention;

3

- la figure 2 est une coupe partielle de côté, également schématique et à plus grande échelle, du véhicule de la figure 1;

- les figures 3 et 4 representant une forme de réalisation du carter selon l'invention; respectivement en perspective fig.3 et en plan retourné avec coupe du renvoi d'angle, sur la fig.4.

- la figure 4 est une vue schématique, en perspective, d'un ensemble motopropulseur dans lequel est incorporé le carter de la figure 3.

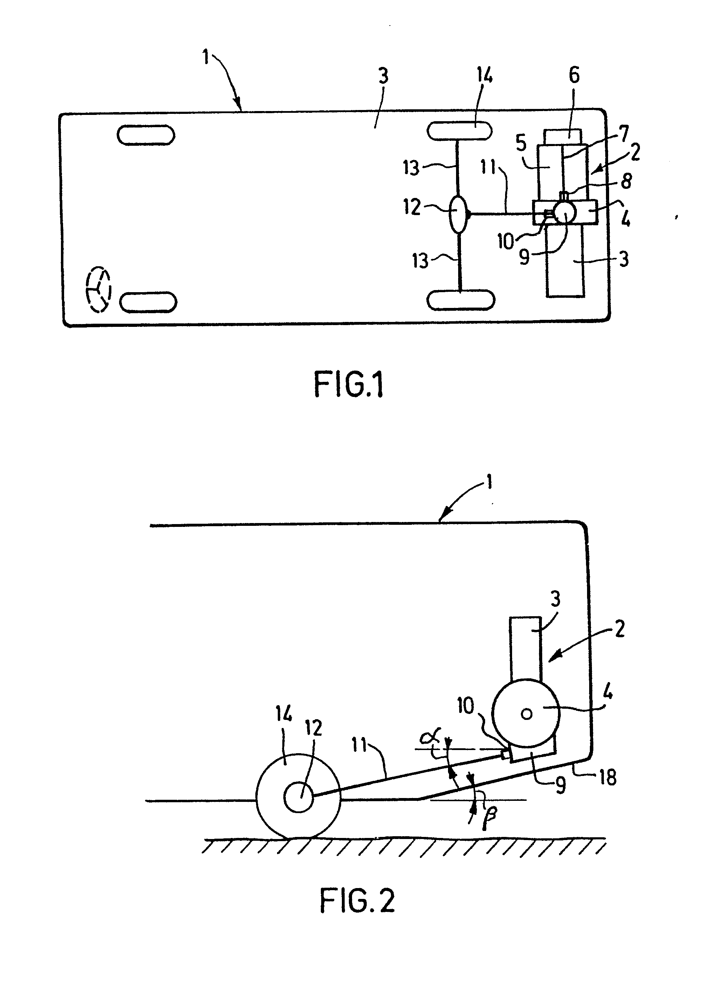

Dans la forme de réalisation choisie et représentée aux figures 1 et 2, un véhicule industriel, ou autobus, 1 comporte un ensemble motopropulseur 2 disposé à l'arrière du pont moteur de ce véhicule. Cet ensemble 2 comprend essentiellement un moteur 3 dont l'axe est disposé transversalement au sens de marche du véhicule, un embrayage 4 à la sortie de ce moteur, suivi par une boîte de vitesses 5 d'axe également transversal associée à une descente de mouvement 6 d'où part une première transmission 7, d'axe parallèle à celui de la boîte 5, aboutissant à l'axe d'entrée 8 d'un renvoi d'angle 9, dont l'axe de sortie 10 est relié à une deuxième transmission 11, elle-même accouplée à un pont arrière 12, d'où partent les arbres 13 des roues arrières 14.

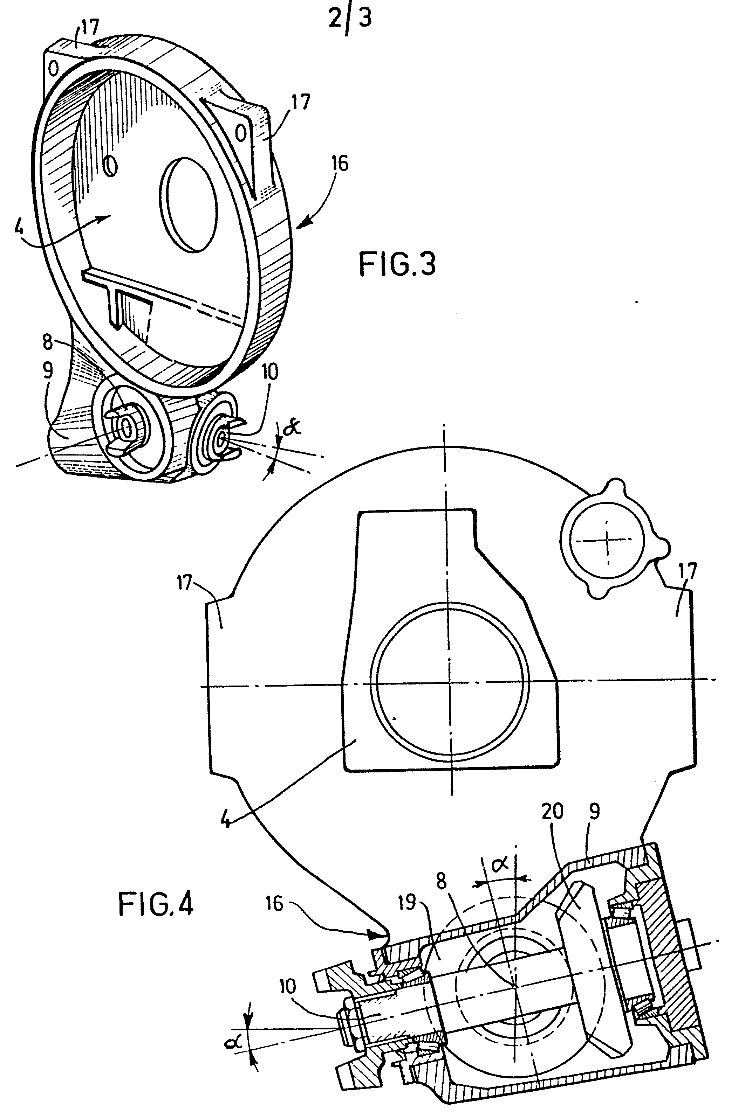

Selon l'invention, le carter de l'embrayage 4 et le renvoi d'angle 9 sont réunis en un carter monobloc commun 16 (fig.3/4),réalisé selon les techniques habituelles de fonderie, ledit renvoi étant à la partie inférieure de ce carter commun. Ce carter 16 comporte des bossages de fixation 17, des brides et autres appendices (non représentés) nécessaires à sa fixation sur le moteur 3, sur la boîte de vitesse 5 et sur le véhicule proprement dit.

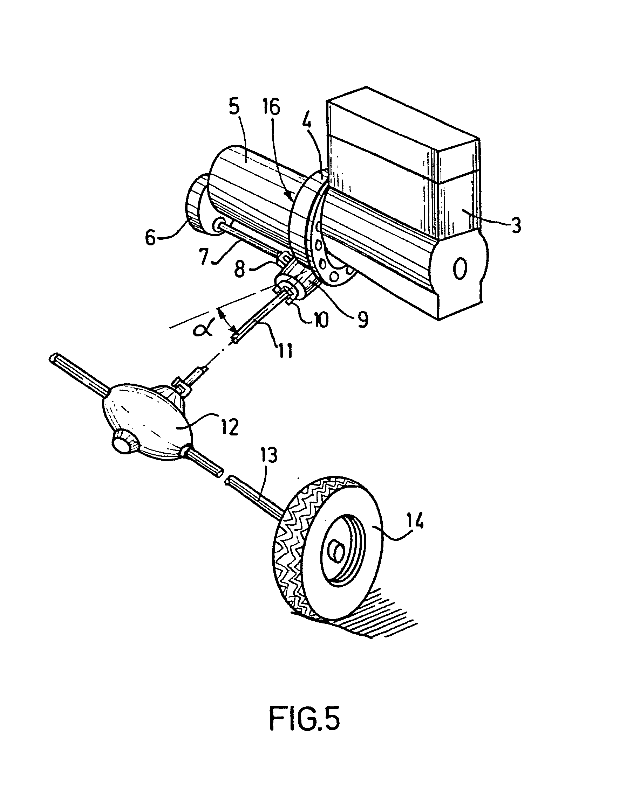

Selon une disposition particulièrement avantageuse, l'axe de sortie 10 du renvoi d'angle 9, qui est perpendiculaire à l'axe d'entrée 8 et à l'axe du moteur 3, est incliné par rapport à l'horizontale d'un angle $\alpha$ (fig. 2 à 5 ) qui est sensiblement égal à l'angle de fuite $\beta$ du véhicule (fig. 2), c'est-à-dire à l'angle que fait avec l'horizontale le plan général du soubassement 18 de la carrosserie de l'extrémité (de préférence arrière) du véhicule.

On obtient ainsi un encombrement particulièrement réduit et un angle d'attaque des cardans des transmissions très favorable.

Dans le même objectif, la disposition de l'ensemble motopropulseur est telle que l'axe de sortie 10 du renvoi d'angle 9 est pratiquement aligné avec l'entrée du pont arrière 12, en projection horizontale.

Par ailleurs, pour réduire encore l'encombrement en hauteur du groupe motopropulseur, l'axe d'entrée 8 du renvoi d'angle 9 est disposé dans un plan vertical distinct de celui contenant l'arbre du moteur 3.

Bien entendu, l'invention n'est pas limitée aux modes de réalisation décrits et représentés et elle est susceptible de nombreuses variantes accessibles à l'homme de l'art, sans que l'on ne s'écarte de l'esprit de l'invention.

Ainsi on doit comprendre que, dans le cas d'un véhicule à traction avant avec le groupe motopropulseur disposé, en porte à faux à l'avant du véhicule, les mêmes dispositions constructives pourraient s'appliquer à l'avant du véhicule.

De même, le carter de transmission en une seule pièce selon l'invention, formant carter d'embrayage et carter de renvoi d'angle, pourrait être réalisé par assemblage en un seul bloc par tout moyen, tel que soudure, boulonnage, collage, de deux carters moulés séparément et reliés, avant ou après leur usinage, étroitement l'un à l'autre en un ensemble compact.

Comme représenté sur la partie en coupe de la figure 4, le carter du renvoi d'angle 9, a pour fonction d'assurer le guidage des arbres des axes d'entrée 8 et de sortie 9 et de supporter les efforts de réaction que ces arbres recoivent de la part du couple d'engrenage conique du renvoi d'angle constitué généralement de deux roues d'engrenage 19,20 qui présentent des nombres de dents égaux ou voisins, mais différent dans leurs taillage et leur calage lorsqu'il s'agit d'un couple spiro-conique pour lequel on désire obtenir un fonctionnement relativement silencieux et fiable.

REVENDICATIONS

1.- Carter pour transmission de véhicule industriel, caractérisé en ce qu'il consiste en un premier élément (16) formant carter d'embrayage (4), moulé ou formé en une seule pièce avec un second élément (9) formant renvoi d'angle de transmission, ledit renvoi comportant de manière usuelle un axe d'entrée (8) et un axe de sortie (10), tous deux munis d'organes d'accouplement, respectivement à une première transmission (7) entraînée par la boîte de vitesses du véhicule, et à une deuxième transmission (11) entraînant au moins un pont moteur (12) dudit véhicule.

2.- Carter selon la revendication 1, caractérisé en ce que l'axe (10) de l'arbre de sortie du renvoi d'angle est incliné par rapport à l'horizontale d'un angle ($\alpha$) correspondant sensiblement à l'angle de fuite ($\beta$) du véhicule équipé du carter (16), c'est-à-dire à l'angle, mesuré dans le sens de la marche, du soubassement de la carrosserie d'une partie d'extrémité du véhicule.

3.- Ensemble motopropulseur groupé à l'arrière d'un véhicule industriel, comprenant un moteur, une boîte de vitesses accouplée à ce moteur par l'intermédiaire d'un embrayage abrité dans le carter selon l'une des revendications 1 ou 2, caractérisé en ce qu'il comporte d'une part, une descente de mouvement (6) à la sortie de cette boite de vitesses, qui entraîne une première transmission (7) reliée à l'axe d'entrée (8) du renvoi d'angle (9) contenu dans ledit carter (16) et d'autre part reliée à l'axe de sortie (10) de ce renvoi (9) une deuxième transmission (11) qui attaque le pont arrière (12) dudit véhicule.

4.- Ensemble selon la revendication 3, caractérisé en ce que l'axe de sortie (10) du renvoi d'angle (9) est sensiblement aligné avec l'entrée du pont arrière (12), en projection sur un plan horizontal.

5.- Ensemble selon l'une quelconque des revendications 3 ou 4, caractérisé en ce que l'axe d'entrée (8) du renvoi d'angle (9) est disposé dans un plan vertical distinct de celui contenant l'arbre du moteur (3).

FIG.1

FIG.2

FIG.3

FIG.4

FIG.5